# EUROPÄISCHE PATENTSCHRIFT

(11) **EP 1 512 453 B1**
(45) Veröffentlichungstag und Bekanntmachung des Hinweises auf die Patenterteilung: **17.07.2013**
(21) Anmeldenummer: 04103455.4
(22) Anmeldetag: 20.07.2004
(51) Int. Cl.: B01D 45/16, F02M 35/022

(54) **Vorrichtung zur Trennung von Partikeln aus einem Medienstrom**
Device for separation of particles from a media flow
Dispositif pour la séparation des particules dans un flux de média

(30) Priorität: 30.08.2003 DE 10340122
(43) Veröffentlichungstag der Anmeldung: 09.03.2005
(73) Patentinhaber: MANN+HUMMEL GmbH, 71638 Ludwigsburg (DE)
(72) Erfinder: Greif, Volker, 67376, Harthausen (DE); Hähn, Jens, 69120, Heidelberg (DE)

(56) Entgegenhaltungen:
- EP-A- 0 210 910
- DE-B- 1 301 647
- FR-A- 1 069 071
- US-A- 1 746 218
- US-A- 2 506 298
- US-A- 3 670 479

## Beschreibung

### Stand der Technik

Die Erfindung betrifft eine Vorrichtung zur Abscheidung von Festpartikeln und Flüssigkeiten aus einem Gasstrom nach Anspruch 1 sowie ein Verfahren zur Abscheidung von Festpartikeln und Flüssigkeiten aus einem Gasstrom nach Anspruch 11.

Abscheider dieser Art werden überwiegend im Ansaugluftstrom von Brennkraftmaschinen eingesetzt, wenn überwiegend mit erhöhtem Schmutz und Flüssigkeitsaufkommen zu rechnen ist, z. B. bei Land- und Baumaschinen aller Art, sowie an Nutzfahrzeugen. Üblicherweise werden diese Vorrichtungen als Vorabscheider verwendet.

Es ist aus der US 3,064,411 eine Vorrichtung bekannt, welche für das Abscheiden von Feststoffen aus fluiden Medien vorgesehen ist und folgende Merkmale aufweist.

Das zylinderförmige Gehäuse der Vorrichtung ist an seinen Stirnseiten konisch verjüngt. An den reduzierten Durchmessern sind der Einlass und der Auslass angeordnet. Innerhalb des beidseitig konisch verengten Zylinders sind anströmseitig ein Einlassleitapparat und abströmseitig ein Austrittsleitapparat angeordnet. Beide Leitapparate sind umfangsseitig am jeweiligen Ende des Zylinders vorgesehen und führen den Medienstrom durch gekrümmte Leitschaufeln in eine Rotationsbewegung. Die Leitapparate sind in ihrem axialen Abstand durch einen zentrisch angeordneten, im Durchmesser reduzierten zylindrischen Kern miteinander verbunden. Der Übergang der Durchmesser zwischen Leitapparaten und Kern wird an beiden Seiten durch einen kegeligen Abschnitt gebildet. Im Anschluss an den Eintrittsleitapparat ist eine Reduzierhülse angebracht, welche in ein zylindrisches Rohr übergeht. Diese Reduzierhülse verengt den Querschnitt des rotierenden Medienstroms und führt somit zu einer Beschleunigung, was eine optimierte Abscheidung zur Folge hat. Die Reduzierhülse endet mittig im zylindrischen Gehäuse, so dass der rotierende Strom durch den umfangsseitig vergrößerten Raum weiterströmt. Vor dem Austrittsleitapparat wird der Luftstrom durch ein ringförmiges Trennelement wieder mit reduziertem Querschnitt aufgenommen und durch ein konisches Element zum Austrittsleitapparat geführt. In der Mitte des Gehäuses ist eine trichterförmige Austragsöffnung vorgesehen, welche die Partikel zu einem Austragsstutzen führt.

Der anströmende Luftstrom wird über die Kegelfläche zu den Leitschaufeln geführt und in Rotation gebracht. Durch die anschließende Verjüngung wird die Rotation beschleunigt und somit die Fliehkraft erhöht. Da sich in Strömungsrichtung der Durchmesser nach der Reduzierhülse wieder aufweitet, werden die Partikel an der äußeren Gehäusewandung abgeschieden. Da der rotierende Luftstrom nur ein Teil des Abscheideraumes durchströmt, bildet sich eine zweite reduzierte Rotationsbewegung an der Mantelfläche des Gehäuses. Durch die unterschiedliche Strömung können die abgeschiedenen Partikel über den tiefliegenden Trichter zur Austragsöffnung gelangen, ohne vom Hauptluftstrom mitgerissen zu werden. Das Medium strömt über die konische Mantelfläche weiter zum Austrittsleitapparat, welcher es durch die gegenseitige Rotationsrichtung der Leitelemente wieder in eine gleichgerichtete Strömung führt.

Nachteilig ist hier der hohe Herstellungsaufwand, welcher durch die Anordnung der einzelnen Luftführungselemente notwendig ist. Weiterhin wird durch den 4-fachen Querschnittswechsel der Hauptströmung ein hoher Strömungswiderstand erzeugt.

Eine Vorrichtung gemäβ Oberbegriff von Anspruch 1 ist aus der US 2,506,298 vorbekannt. Aufgabe der Erfindung ist es für eine schnelle und einfache Befestigung des Einleitapparates im gehäuse zusorgen.

### Vorteile der Erfindung

Die erfindungsgemäße Vorrichtung besteht aus einem hohlzylindrischen Gehäuse, an welchem ein Einlass und ein Auslass angeordnet sind. Einlassseitig ist ein Eintrittsleitapparat angeordnet, welcher den Medienstrom in eine Rotationsbewegung versetzt. Der Medienstrom kann dabei ein Luft- oder ein Gasstrom sein, welcher mit flüssigen und / oder festen Partikeln verunreinigt ist. Der Eintrittsleitapparat wird vorzugsweise aus einer planförmigen Scheibe gebildet, welche eine Umfangskontur oder einen Ringbund aufweist, welcher mit dem Strömungsquerschnitt des Gehäuses korrespondiert und im Einlassbereich des Gehäuses befestigt ist. Am Eintrittsleitapparat angeordnete Leitelemente erstrecken sich in einem Winkel oder in einer Wölbung zur Strömungsrichtung. Die Leitelemente sind dabei vorzugsweise an einer ringkranzförmigen Stirnfläche des Leitapparates angeordnet. Es ist auch möglich die Leitelemente über den gesamten Durchmesser des Leitapparates auszudehnen oder sie an der radialen Außenfläche des Leitapparates anzuordnen. Die Leitelemente ragen dabei gewölbt oder in einem Winkel in den Innenbereich des Gehäuses. Im nachfolgend angeordneten Abscheidebereich werden die durch Fliehkraft aus dem Luftstrom abgeschiedenen Partikel und Flüssigkeiten an die Innenwand des Gehäuses geschleudert. Die abgeschiedenen Partikel können fest oder flüssig sein und bewegen sich der Schwerkraft folgend nach unten. Auslassseitig ist ein Austrittsleitapparat angeordnet, welcher den rotierenden Luftstrom durch die Krümmung der Leitelemente in seinem Drallwinkel gezielt aufnimmt, die Rotation gezielt verzögert und in eine geradegerichtete Strömung überführt. Ragt der Austrittsleitapparat über einen axialen Bereich in den Abscheidebereich, so muss zwischen dem Austrittsleitapparat und dem Gehäuse zumindest über einen axialen Teilbereich ein radialer Ringspalt vorhanden sein, der das Abscheiden der Partikel ermöglicht. Der Austrittsleitapparat kann dabei einstückig mit dem Gehäuse hergestellt sein oder durch eine Schweiß-, Schraub-, Klebe- oder eine sonstige aus dem Stand der Technik bekannte Verbindungsart im Gehäuse befestigt werden. Vorzugsweise sind die Leitelemente über eine axiale Länge von einem zylindrischen Kern aufgenommen, der eine ideale Trägerkontur bildet.

In vorteilhafter Weise wird durch die gezielt abgestimmte Krümmung der Leitelemente die Rotation des Luftstromes in eine geradlinige Bewegung umgelenkt, wodurch sich der Druckverlust des Abscheiders um bis zu ca. 60 % minimiert. Dies eröffnet die Möglichkeit, dass bei gleicher Abscheideleistung der Druckverlust um bis zu ca. 60 % minimiert werden kann, oder es wird ermöglicht, bei gleichem Druckniveau die Abscheideleistung der Vorrichtung erheblich zu steigern.

In einer vorteilhaften Ausgestaltung der Erfindung ist im unteren Bereich des Abscheideraumes eines Trennelement angeordnet, welches in einem radialen Abstand zwischen den Leitelementen und der Gehäusewandung radial umlaufend angeordnet ist. Somit kann vorteilhaft verhindert werden, dass abfallende Partikel von der Strömung wieder aufgenommen werden und durch den Auslass abströmen.

Gemäß einer weiteren vorteilhaften Ausgestaltung der Erfindung ist zum Auffangen der abgeschiedenen Partikel ein Sammelraum angeordnet. Der zwischen Austrittsleitelementen und Gehäuse entstehende umlaufende Spalt, welcher durch ein Trennelement abgegrenzt ist, lässt sich durch die Anordnung eines umlaufenden Ringes zwischen Gehäuse und Trennelement abschließen. Dadurch bildet sich am unteren Ende des Abscheidebereiches ein Sammelraum. Das unkontrollierte Ausscheiden der Schmutzpartikel aus dem Gehäuse wird durch den Sammelraum vorteilhaft verhindert und es kann eine gezielte Austragung der Partikel erreicht werden. Diese Austragung wird z. B. durch die Anbringung eines Austragsstutzens ermöglicht, der die Partikel an eine beliebige, tiefere Position ableiten kann.

In einer weiteren vorteilhaften Ausgestaltung der Erfindung überragen die Leitelemente des Austrittsleitapparates das Trennelement entgegen der Strömungsrichtung in einem Teilbereich. Die radialen Außenkanten der Leitelemente liegen am Trennelement an oder sind mit diesem verbunden. Die axialen Enden der Leitelemente überragen das Trennelement entgegen der Strömungsrichtung. Ist kein Trennelement vorhanden, kann diese Maßnahme auch dadurch erzielt werden, dass die Leitelemente über einen axialen Bereich einen radialen Ringspalt zum Gehäuse aufweisen. Durch diese Ausgestaltungen kann der Luftstrom über einen Teilbereich des Austrittsleitapparates axial und radial in die Leitelemente einströmen. Dadurch vermindert sich der Strömungswiderstand vorteilhaft oder es erhöht sich bei gleichem Strömungswiderstand der Volumenstrom.

Ein herstellungstechnischer Vorteil wird erreicht, wenn die Verbindung zwischen Kern und Gehäuse oder zwischen Trennelement und Gehäuse durch die Leitschaufeln hergestellt wird. Die Leitelemente können mit dem Kern, dem Gehäuse oder dem Trennelement einstückig hergestellt und mit der jeweils entgegengesetzten Seite verklebt, verschweißt, gefügt oder über Schnappverbindungen fixiert werden. Durch diese Maßnahme wird die Befestigung zwischen Kern und Gehäuse durch die Leitelemente gesichert und es ist kein zusätzliches Bauteil zur Befestigung des Kerns erforderlich, wodurch vorteilhaft Material eingespart wird und auch keine zusätzlichen Halteelemente den Strömungswiderstand erhöhen.

In einer weiteren vorteilhafte n Ausgestaltung der Erfindung wird die Anströmseite des Kerns des Austrittsleitapparates kugelförmig gestaltet, wodurch sich ein vorteilhafter, reduzierter Strömungswiderstand ergibt.

Gemäß einer weiteren vorteilhaften Ausgestaltung ist die Abströmseite des Kerns kegelförmig gestaltet. Der kegelförmige Abschluss wirkt dabei in vorteilhafter Weise wie ein Diffusor und steigert somit die Druckrückgewinnung, wodurch der Strömungswiderstand reduziert wird.

Ein weiterer herstellungstechnischer Vorteil wird durch die hinterschneidungsfreie Gestaltung des gesamten Gehäuses mit einem Leitapparat erreicht, wobei der gegensätzlich gerichtete zweite Leitapparat hierbei nachträglich befestigt werden muss. Somit kann das Gehäuse samt einem Leitapparat einstückig durch ein Urformverfahren, insbesondere im Spritzgussverfahren aus einem Polymer oder aus einem Leichtmetall, hergestellt werden.

Der Vorteil liegt in der sehr wirtschaftlichen Produktionsmethode und in der Integration verschiedener Funktionselemente in einem einstückigen Bauteil.

Vorteilhaft für eine optimale Abstimmung der Vorrichtung ist ein Verhältnis zwischen Kerndurchmesser des Austrittsleitapparates und dem Gehäusedurchmesser von 0,4 bis 0,8. Bei diesem Verhältnis ergibt sich ein kleinstmöglicher Druckverlust.

Bei der Erfindung wird die Befestigung des Eintrittsleitapparates dadurch erleichtert, dass an der Einströmseite des Gehäuses Aussparrungen angebracht sind, welche die Befestigung durch Klipsen ermöglichen. Dadurch kann der Eintrittsleitapparat schnell und einfach angebracht werden.

Das erfindungsgemäße Verfahren ermöglicht das Abscheiden von Partikeln und Flüssigkeiten aus einem Gasstrom durch einen Fliehkraftabscheider bei minimalem Druckverlust. Hierbei wird das durch den Einlass strömende Gas durch einen Eintrittsleitapparat in Rotation gebracht. Der rotierende Gasstrom durchströmt einen Abscheidebereich, in dem die Partikel der Schwerkraft folgend an die Gehäusewandung geschleudert werden. Im weiteren Strömungsverlauf bewegt sich der rotierende Gasstrom durch einen Austrittsleitapparat, welcher den Gasstrom wieder gerade richtet. Dabei nehmen die Leitelemente des Austrittsleitapparates den Gasstrom in seinem Drallwinkel auf, richten durch ihre Krümmung die Drallbewegung in eine geradlinige Bewegung und stabilisieren den Luftstrom in der geradlinigen Bewegung. Hiermit wird die Strömungsenergie des rotierenden Luftstroms in eine gerade Bewegung geführt und somit die Druckdifferenz minimiert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: das Gehäuse mit Leitapparat im Teilschnitt und
- Figur 2: die Krümmung eines Leitelementes des Austrittsapparates.

### Beschreibung der Ausführungsbeispiele

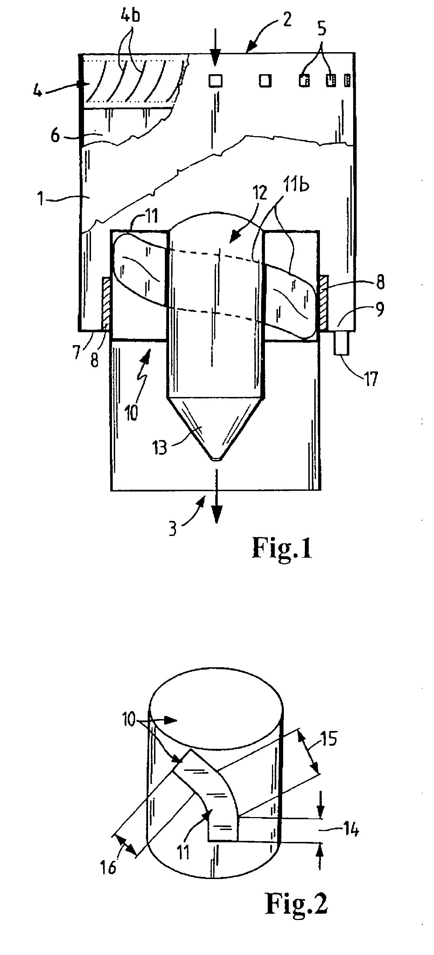

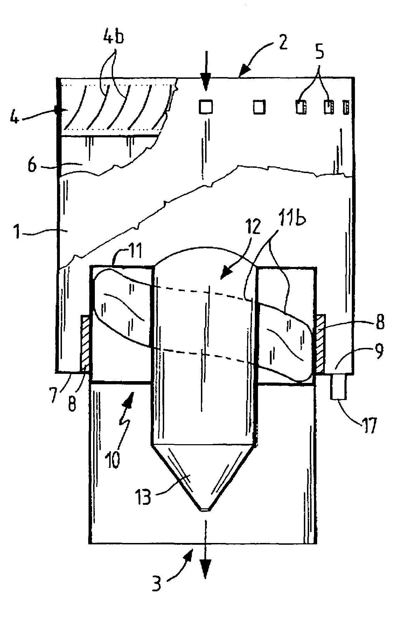

Figur 1 zeigt ein vorzugsweise hohlzylindrisches Gehäuse 1, in welchem ein Einlass 2 und ein Auslass 3 angeordnet sind, weiterhin ist ein Eintrittsleitapparat 4 in Aussparungen 5 am Gehäuse 1 eingeklipst. In einem Abscheidebereich 6 lagern sich die abgeschiedenen Partikel an der Wandung ab. Durch die Anordnung eines Sammelbodens 7, der unterhalb des Abscheidebereiches 6 angeordnet ist, werden die abgeschiedenen Partikel aufgefangen. Ein Trennelement 8 verhindert, dass die abgeschiedenen Partikel vom Luftstrom mitgerissen werden, und bildet zusammen mit dem Sammelboden 7 einen Sammelraum 9. Ein Austragsstutzen 17 ist am Sammelboden 7 angeordnet und bildet einen Anschluss für eine gezielte Ableitung der abgeschiedenen Partikel. Ein Austrittsleitapparat 10 besteht aus Leitelementen 11 und einem zylindrischen Kern 12. Dieser ist mit einem Trennelement 8, dem Sammelboden 7 und dem Gehäuse 1 einstückig hergestellt. Die Außenkontur der Leitelemente 11 weist in der Darstellung einen rechtwinkligen Querschnitt auf. Die dargestellten Dralllinien 11 b deuten die Rotationsrichtung an, welche entgegengesetzt zur Rotationsrichtung des Eintrittsleitapparates 4 ausgerichtet ist. Die einstückig ausgeführte Verbindung zwischen Austrittsleitapparat 10 und Gehäuse 11 kann alternativ auch durch Klebe-, Schweiß oder Schnappverbindungen hergestellt werden. Der Kern 12 ist im Anströmbereich kugelförmig und im Abströmbereich kegelförmig 13 abgeschlossen und vermindert somit den Strömungswiderstand seines Querschnitts. Der Auslasskegel 13 ist z. B. durch eine Klipsverbindung oder eine Verklebung am Kern 12 befestigt, wodurch fertigungstechnisch ein Ausdrehen des Werkzeugkerns ermöglicht wird. Gehäuse 1, Austrittsleitapparat 10, Kern 12, Sammelraum 8, Trennelement 7 und Austragsstutzen 17 können einstückig hergestellt werden. Das Trennelement 8 überdeckt die Leitelemente 11 des Austrittsleitapparates 10 in einem Teilbereich und minimiert damit den Strömungswiderstand. Die anströmende Luft wird durch die Leitelemente 4b des Eintrittsleitapparates 4 in Rotation gebracht. Der rotierende Luftstrom durchströmt den Abscheidebereich 6, infolge der Schwerkraft werden die im Luftstrom enthaltenen Partikel nach außen an die Wandung des Abscheidebereiches 6 geschleudert. Die abgesonderten Partikel werden aus dem Sammelraum 9 gezielt durch den Austragsstutzen 17 abgeschieden oder haben bei einer Ausführung ohne Sammelboden 7 die Möglichkeit, frei aus dem Abscheidebereich auszufallen. Der rotierende Luftstrom wird in seinem Drallwinkel axial und in einem Teilabschnitt auch radial von den Leitelementen 11 des Austrittsleitapparates 10 aufgenommen, gezielt verzögert und in eine geradegerichtete Strömung geführt. Durch die gezielte Umlenkung des Luftstroms wird die kinetische Energie des rotierenden Luftstromes von den Leitelementen 11 aufgenommen und in eine laminare, geradlinige Bewegung umgeleitet. Die Anpassung der Leitelemente 11 des Austrittsleitapparates 10 an den Drallwinkel des Luftstromes und die weiterführende Ausrichtung vermeiden die Entstehung von Strömungsturbulenzen und minimieren den Widerstand der Luftreibung.

Figur 2 zeigt in perspektivischer Darstellung den Krümmungsverlauf eines Leitelementes 11 des Austrittsleitapparates gemäß Figur 1, welches auf einem zylindrischen Kern angeordnet ist. Der Figur 1 entsprechende Bauteile sind mit den gleichen Bezugszeichen versehen. Das Leitelement 11 ist dabei streifenförmig ausgeführt und senkrecht auf der Umfangsfläche des Kerns 12 angeordnet. Die Leitelemente 11 bilden somit im eingebauten Zustand, zwischen den in Figur 1 als Kern 12 und Gehäuse 1 dargestellten Bauteilen, einen Strömungskanal. Die Strömungsrichtung des Kanales wird von den Konturen der Leitelemente bestimmt. Der Winkel der Eingangskontur 16 zur Achse des zylindrischen Kerns 12 entspricht dem Rotationswinkel des Luftstromes. Der rotierende Luftstrom strömt parallel zu den Flächen der Eingangskontur 16 ein und wird im weiteren Strömungsverlauf von der Verzögerungskontur 15 parallel zur Zylinderachse umgelenkt. Die Fläche der Ausströmungskontur 14 führt den Luftstrom parallel zur Zylinderachse weiter, wodurch eine Stabilisierung des Luftstromes erreicht wird.

## Patentansprüche

1. Vorrichtung zur Trennung von Partikeln aus einem Medienstrom, bestehend aus einem hohlzylindrischen Gehäuse, in welchem ein Einlass und ein Auslass angeordnet sind, einem einlassseitigen Eintrittsleitapparat, welcher den Medienstrom in eine Rotationsbewegung versetzt, einem auslassseitigen Austrittsleitapparat, welcher den rotierenden Luftstrom durch die Krümmung der Leitelemente in seinem Drallwinkel gezielt aufnimmt, die Rotation gezielt verzögert und in eine geradegerichtete Strömung überführt, einem dem Eintrittsleitapparat nachfolgend angeordneten Abscheidebereich, in dem die durch Fliehkraft aus dem Luftstrom abgeschiedenen Partikel und Flüssigkeiten an die Innenwand des Gehäuses geschleudert werden, und einem zylindrischen Kern, an welchem über eine axiale Länge radial Leitelemente des Austrittsleitapparates angeordnet sind, wobei die Krümmung der Leitelemente des Austrittsleitapparates eine Eingangskontur aufweist, welche auf den Strömungswinkel der Drallströmung abgestimmt ist, wobei in Durchströmungsrichtung im weiteren Verlauf die Krümmung der Leitelemente eine Verzögerungskontur und eine Beruhigungskontur aufweist, welche in ihrer Linienführung ineinander übergehen, **dadurch gekennzeichnet, dass** das Gehäuse einströmseitig Aussparungen zur Befestigung des Eintrittsleitapparates durch Klipsen aufweist und der Eintrittsleitapparat durch Klipsen an dem Gehäuse befestigt ist.

2. Vorrichtung nach Anspruch 1, **dadurch gekennzeichnet, dass** durch ein umfangsseitig angeordnetes Trennelement angrenzend an den Abscheidebereich ein Sammelraum derart angeordnet ist, dass die abgeschiedenen Partikel aufgefangen werden.

3. Vorrichtung nach Anspruch 2, **dadurch gekennzeichnet, dass** die Verbindung zwischen Trennelement und Gehäuse geschlossen ausgeführt ist und dadurch den Sammelraum verschließt.

4. Vorrichtung nach Anspruch 2, **dadurch gekennzeichnet, dass** die Leitelemente die Kante des Trennelementes in axialer Richtung entgegen der Strömungsrichtung überragen.

5. Vorrichtung nach einem der vorhergehenden Ansprüche, **dadurch gekennzeichnet, dass** die Leitelemente des Austrittsleitapparates die Verbindung zwischen Kern und Gehäuse herstellen.

6. Vorrichtung nach einem der vorhergehenden Ansprüche, **dadurch gekennzeichnet, dass** die Kontur des Kerns anströmseitig kugelförmig angeordnet ist.

7. Vorrichtung nach einem der vorhergehenden Ansprüche, **dadurch gekennzeichnet, dass** die Kontur des Kerns abströmseitig kegelförmig angeordnet ist.

8. Vorrichtung nach einem der vorhergehenden Ansprüche, **dadurch gekennzeichnet, dass** der Kerndurchmesser dem 0,4 bis 0,8-fachen des Gehäusedurchmessers entspricht.

9. Verfahren zum Abscheiden von Partikeln aus einem Medienstrom in einer Vorrichtung gemäß Anspruch 1, wobei der Gasstrom durch einen Eintrittsleitapparat in Rotation gebracht wird, wodurch sich die Partikel aus dem Medien durch die Schwerkraft radial abscheiden, wobei das rotierend strömende Medium durch einen Austrittsleitapparat in eine laminare Strömung gerichtet wird, wobei am Austrittsleitapparat Leitelemente angeordnet sind, welche die rotierende Strömung in ihrem Strömungswinkel aufnehmen, durch eine Krümmung gerade ausrichten und durch einen geraden Abschnitt stabilisieren, **dadurch gekennzeichnet**, daβ der Ein leitapparat durch Klipsen in einströmseitige Aussparangen im gehäuse befestigt wird.

## Claims

1. Device for separating particles from a media flow, consisting of a hollow-cylindrical housing in which are disposed an inlet and an outlet, an inlet guiding apparatus on the inlet side which converts the media flow into a rotational movement, an outlet guiding apparatus on the outlet side which receives the rotating air flow in a targeted manner by means of the curvature of the guiding elements in its swirl angle, delays the rotation in a targeted manner and guides it into a straight flow, a separation area in which the particles and liquids separated from the air flow by centrifugal force are centrifuged against the internal wall of the housing and that is disposed downstream of the inlet guiding apparatus, and a cylindrical core on which guiding elements of the outlet guiding apparatus are disposed radially over an axial length, the curvature of the guiding elements of the outlet guiding apparatus featuring an inlet contour which is matched to the flow angle of the swirl flow, the curvature of the guiding elements featuring in through-flow direction in the further course a delay contour and a slowdown contour which merge in their line layout, **characterized in that** the housing features on the inflow side recesses for attaching the inlet guiding apparatus by clips and that the inlet guiding apparatus is attached to the housing by clips.

2. Device according to claim 1, **characterized in that** a collecting chamber that is disposed by a circumferentially disposed separating element adjacent to a separation area in such a way that the separated particles are collected.

3. Device according to claim 2, **characterized in that** the connection between separating element and housing is realized in a closed manner and, as a result, closes the collecting chamber.

4. Device according to claim 2, **characterized in that** the guiding elements protrude the edge of the separating element upstream in axial direction

5. Device according to one of the above claims, **characterized in that** the guiding elements of the outlet guiding apparatus realize the connection between core and housing.

6. Device according to one of the above claims, **characterized in that** the contour of the core is disposed spherically at the inflow side.

7. Device according to one of the above claims, **characterized in that** the contour of the core is disposed conically at the outflow side.

8. Device according to one of the above claims, **characterized in that** the core diameter corresponds 0.4 to 0.8 times the housing diameter.

9. Method for separating particles from a media flow in a device according to claim 1, the gas flow being brought into rotation by an inlet guiding apparatus so that the particles are separated radially from the media by gravity, the medium flowing by rotation being directed into a laminar flow by an outlet guiding apparatus, guiding elements, which receive the rotating flow in its flow angle, align it by a curvature and stabilize it by a straight section, being disposed at the outlet guiding apparatus, **characterized in that** the inlet guiding apparatus is attached by clips in recesses on the inflow side in the housing.

## Revendications

1. Dispositif destiné à la séparation de particules d'un flux de milieux, constitué d'un boîtier en forme de cylindre creux dans lequel sont disposées une entrée et une sortie, d'un appareil de guidage d'entrée côté entrée qui met en rotation le flux de milieux, d'un appareil de guidage de sortie côté sortie qui réceptionne le flux d'air en rotation, à travers la courbure des éléments de guidage, de manière ciblée dans son angle de torsion, temporise la rotation de manière ciblée et la transforme en un flux rectiligne, d'une zone de séparation disposée en aval de l'appareil de guidage d'entrée et dans laquelle les particules et liquides séparés du flux d'air sous l'effet de la force centrifuge sont projetés sur la paroi intérieure du boîtier et d'un noyau cylindrique sur lequel des éléments de guidage de l'appareil de guidage de sortie sont disposés en sens radial sur une longueur axiale, la courbure des éléments de guidage de l'appareil de guidage de sortie présentant un contour d'entrée qui est adapté à l'angle d'écoulement du flux de torsion, la courbure des éléments de guidage présentant par la suite, dans le sens d'écoulement, un contour de temporisation et un contour de stabilisation dont les tracés se confondent, **caractérisé en ce que** le boîtier présente, coté entrée, des évidements servant à fixer l'appareil de guidage d'entrée par clipsage et que l'appareil de guidage d'entrée est fixé par clipsage au boîtier.

2. Dispositif selon la revendication 1, **caractérisé en ce que**, par un élément de séparation disposé en sens circonférentiel et adjacent à la zone de séparation, un compartiment collecteur est disposé de manière à ce que les particules séparées soient recueillies.

3. Dispositif selon la revendication 2, **caractérisé en ce que** la liaison entre l'élément de séparation et le boîtier est exécutée de manière fermée et ferme ainsi le compartiment collecteur.

4. Dispositif selon la revendication 2, **caractérisé en ce que** les éléments de guidage dépassent de l'arête de l'élément de séparation en sens axial, dans le sens inverse au sens d'écoulement.

5. Dispositif selon l'une des revendications précédentes, **caractérisé en ce que** les éléments de guidage de l'appareil de guidage de sortie établissent la liaison entre le noyau et le boîtier.

6. Dispositif selon l'une des revendications précédentes, **caractérisé en ce que** le contour du noyau est disposé de manière sphérique côté entrée.

7. Dispositif selon l'une des revendications précédentes, **caractérisé en ce que** le contour du noyau est disposé de manière conique côté sortie.

8. Dispositif selon l'une des revendications précédentes, **caractérisé en ce que** le diamètre du noyau correspond à 0,4 à 0,8 fois le diamètre du boîtier.

9. Procédé de séparation de particules d'un flux de milieux dans un dispositif selon la revendication 1, le flux de gaz étant mis en rotation par un appareil de guidage d'entrée, les particules étant ainsi séparées des milieux en sens radial sous l'effet de la force de gravité, le milieu s'écoulant en rotation étant dirigé par un appareil de guidage de sortie dans un flux laminaire, des éléments de guidage qui réceptionnent l'écoulement rotatif dans son angle d'écoulement, le redressent par une courbure et le stabilisent par une section droite étant disposés sur l'appareil de guidage de sortie, **caractérisé en ce que** l'appareil de guidage d'entrée est fixé par clipsage dans des évidements situés côté arrivée dans le boîtier.
